# EUROPEAN PATENT APPLICATION

(11) **EP 4 481 849 A1**
(43) Date of publication of application: **25.12.2024**
(21) Application number: 23756355.6
(22) Date of filing: 14.02.2023
(51) Int. Cl.: H01M 4/1391, H01M 4/131, H01M 4/36, H01M 4/505, H01M 4/62, H01M 10/052, H01M 10/0562

(54) **ELECTRODE MIXTURE AND ELECTRODE SLURRY AND BATTERY WHICH USE SAID ELECTRODE MIXTURE**

(30) Priority: 18.02.2022 JP 2022024301
(71) Applicant: Mitsui Mining & Smelting Co., Ltd., Shinagawa-ku Tokyo 141-8584 (JP)
(72) Inventor: ICHIKI, Katsuya, Ageo-shi, Saitama 362-0021 (JP)
(74) Representative: Novagraaf Technologies
(86) International application number: PCT/JP2023/004945
(87) International publication number: WO 2023/157830

(57) **Abstract**

An electrode mixture of the present invention contains an active material containing a lithium (Li) element, a manganese (Mn) element, and an oxygen (O) element and a sulfur compound containing a lithium (Li) element, a phosphorus (P) element, a sulfur (S) element, and a halogen (X) element, wherein the sulfur compound has a mole ratio of the halogen (X) element to the phosphorus (P) element of less than 1. Preferably, the active material includes a core portion containing a lithium (Li) element, a manganese (Mn) element, and an oxygen (O) element and a coating portion located on the surface of the core portion. Preferably, the coating portion contains a lithium (Li) element, an element A, and an oxygen (O) element, where A is at least one element selected from titanium (Ti), zirconium (Zr), tantalum (Ta), niobium (Nb), and aluminum (Al).

## Description

### Technical Field

The present invention relates to an electrode mixture, and to an electrode slurry and a battery using the same.

### Background Art

Currently, many lithium-ion secondary batteries use electrolyte solutions that contain flammable organic solvents. By contrast, solid-state batteries use solid electrolytes instead of electrolyte solutions and do not contain flammable organic solvents, and it is hoped that solid-state batteries will be commercialized as batteries that are both safe and have high energy densities.

As a type of solid electrolyte that is used in a solid-state battery, a sulfide solid electrolyte has been researched. However, a solid-state battery containing a sulfide solid electrolyte has a problem in that, when the battery is charged and discharged, a reaction resistance between the sulfide solid electrolyte and an electrode active material in an electrode mixture increases, and movement of lithium ions is restricted. The reason for this is considered to be that a resistive layer is formed at an interface between the active material and the sulfide solid electrolyte due to the reaction therebetween. To address this problem, attempts have been made to suppress an increase in reaction resistance by coating the surface of the active material with a specific compound (Patent Literatures 1 to 3).

### Citation List

### Patent Literature

Patent Literature 1: JP 2012-99323A
Patent Literature 2: US 2014/0072875A1
Patent Literature 3: JP 2015-201388A

### Summary of Invention

However, when the charging voltage of a solid-state battery is increased for the purpose of increasing the energy density of the solid-state battery, even with the technologies disclosed in the above-listed patent literatures, the reaction resistance between the sulfide solid electrolyte and the electrode active material in the electrode mixture increases, and this leads to a new problem in that battery characteristics such as the discharge capacity of the solid-state battery containing the electrode mixture will deteriorate.

Therefore, an object of the present invention is to provide an electrode mixture in which an increase in reaction resistance between an active material and a solid electrolyte can be suppressed even when the charging voltage of a solid-state battery is increased, and an electrode slurry and a battery using the electrode mixture.

The inventors of the present invention conducted in-depth research to achieve the above-described object, and found that, with respect to a sulfur compound constituting a solid electrolyte in an electrode mixture and containing a lithium (Li) element, a phosphorus (P) element, a sulfur (S) element, and a halogen (X) element, when the mole ratio of the halogen element to the phosphorus element is controlled to be less than or equal to a predetermined ratio, an increase in reaction resistance in the electrode mixture can be suppressed even when the charging voltage of the solid battery is increased, and thus, the present invention was achieved.

That is to say, the present invention provides an electrode mixture containing an active material containing a lithium (Li) element, a manganese (Mn) element, and an oxygen (O) element and a sulfur compound containing a lithium (Li) element, a phosphorus (P) element, a sulfur (S) element, and a halogen (X) element, wherein the sulfur compound has a mole ratio of the halogen (X) element to the phosphorus (P) element of less than 1.

Also, the present invention provides an electrode slurry containing the electrode mixture and a solvent.

Furthermore, the present invention provides a battery including a positive electrode layer, a negative electrode layer, and an electrolyte layer containing a solid electrolyte and being disposed between the positive electrode layer and the negative electrode layer, wherein the positive electrode layer contains the electrode mixture.

### Description of Embodiments

Hereinafter, the present invention will be described based on preferred embodiments thereof.

The present invention relates to an electrode mixture containing an active material containing a lithium (Li) element, a manganese (Mn) element, and an oxygen (O) element and a sulfur compound containing a lithium (Li) element, a phosphorus (P) element, a sulfur (S) element, and a halogen (X) element, wherein the sulfur compound has a mole ratio of the halogen (X) element to the phosphorus (P) element of less than 1. The active material and the sulfur compound contained in the electrode mixture of the present invention will be individually described below.

### Active Material

The active material is a part of the electrode mixture of the present invention that mainly contributes to an electrode reaction. In the present invention, the active material is preferably used as a positive electrode active material. The active material is typically in particle form, and the particles may consist entirely of a single substance or may be constituted by a composite having a core particle and a coating portion disposed on the surface of the core particle. When the active material is constituted by the latter composite, the active material of the electrode mixture of the present invention has a structure having core particles and coating portions disposed on the surface of the core particles.

### Core Particle

The core particles preferably contain a complex oxide containing a lithium (Li) element, a manganese (Mn) element, and an oxygen (O) element or a complex oxide containing a lithium (Li) element, an element M (M will be described later), and an oxygen (O) element. Examples of the complex oxides include spinel-type complex oxides, lithium-metal complex oxides having a layered rock salt-type crystal structure, and the like. The core particles containing the above-described materials advantageously lead to further improved performance of a battery obtained using the electrode mixture of the present invention.

It is preferable that, when used as a positive electrode active material, the core particles have a working potential of at least 4.5 V against a metallic Li reference potential. The wording "having a working potential of at least 4.5 V against a metallic Li reference potential" does not necessarily mean "having only a working potential of at least 4.5 V as a plateau region", but also encompasses "partially having a working potential of at least 4.5 V". Accordingly, the core particles used in the present invention are not limited to a positive electrode active material composed entirely of a 5 V class positive electrode active material that has a working potential of at least 4.5 V as a plateau region. For example, the core particles used in the present invention may also contain a positive electrode active material that has a working potential of less than 4.5 V as a plateau region. Specifically, the core particles may contain a positive electrode active material that is a lithium-metal complex oxide with a layered rock salt-type crystal structure having a plateau in a 3.6-3.8 V region, but that allows for a working potential of at least 4.5 V at the end stage of charging or the initial stage of discharging.

When the core particles contain a spinel-type complex oxide, the core particles may contain another element in addition to the Li, Mn, and O elements described above. The other element may be, for example, an element M1 that is one element, or a combination of two or more elements, selected from a nickel (Ni) element, a cobalt (Co) element, and an iron (Fe) element.

The other element may also be, for example, an element M2 that is one element, or a combination of two or more elements, selected from a sodium (Na) element, a magnesium (Mg) element, an aluminum (Al) element, a phosphorus (P) element, a potassium (K) element, a calcium (Ca) element, a titanium (Ti) element, a vanadium (V) element, a chromium (Cr) element, a copper (Cu) element, a gallium (Ga) element, an yttrium (Y) element, a zirconium (Zr) element, a niobium (Nb) element, a molybdenum (Mo) element, an indium (In) element, a tantalum (Ta) element, a tungsten (W) element, a rhenium (Re) element, and a cerium (Ce) element.

In the present invention, either one of the elements M1 and M2 or both of the elements M1 and M2 may be used.

An example of the spinel-type complex oxide contained in the core particles is a spinel-type lithium manganese-containing complex oxide having a crystal structure in which the Mn sites in LiMn₂O_{4-δ} are partially replaced with the Li element, the element M1, and the element M2.

Preferably, the element M1 is a substituent element that mainly contributes to realization of a working potential of at least 4.5 V against a metallic Li reference potential. The element M1 preferably contains, for example, at least one element selected from a Ni element, a Co element, and an Fe element as described above, and particularly preferably contains at least one element selected from a Ni element and a Co element.

Preferably, the element M2 is a substituent element that mainly contributes to stabilization of the crystal structure and hence improvement in battery characteristics.

An example of the composition of the complex oxide contained in the core particles is that including a spinel-type lithium manganese-containing complex oxide represented by the formula (1) below, for example. The element M1 and the element M2 in the formula (1) are as described above.

Li₁₊ₓ(M1_{y}M2_{z}Mn_{2-x-y-z})O_{4-δ} (1)

In the formula (1), x is, for example, preferably 0 or greater, more preferably 0.01 or greater, and even more preferably 0.02 or greater. On the other hand, x is, for example, preferably 0.20 or less, more preferably 0.10 or less, and even more preferably 0.08 or less.

Also, y, which indicates the M1 content, is, for example, preferably 0.20 or greater, more preferably 0.30 or greater, and even more preferably 0.35 or greater. On the other hand, y is, for example, preferably 1.20 or less, more preferably 1.10 or less, and even more preferably 1.05 or less.

Also, z, which indicates the M2 content, is, for example, preferably 0 or greater. On the other hand, z is, for example, preferably 0.50 or less, more preferably 0.40 or less, and even more preferably 0.30 or less.

Another example of the composition of the complex oxide contained in the core particles is a spinel-type lithium manganese-containing complex oxide represented by the formula (2) below, for example.

Li₁₊ₓ(Ni_{y}M_{z}Mn_{2-x-y-z})O_{4-δ} (2)

In the formula (2), x may be the same as x in the formula (1) described above, and a description thereof is therefore omitted here.

In the formula (2), y is, for example, preferably 0.20 or greater, more preferably 0.30 or greater, and even more preferably 0.35 or greater. On the other hand, y is, for example, preferably 0.70 or less, more preferably 0.60 or less, and even more preferably 0.55 or less.

In the formula (2), z, which indicates the mole ratio of M, is, for example, preferably 0 or greater. On the other hand, z is, for example, preferably 0.50 or less, more preferably 0.40 or less, and even more preferably 0.30 or less.

In the formula (2), M is preferably at least one element selected from Na, Mg, Al, P, K, Ca, Ti, V, Cr, Fe, Co, Cu, Ga, Y, Zr, Nb, Mo, In, Ta, W, Re, and Ce.

"4-δ" in the formulae (1) and (2) indicates that the above-described complex oxide may include an oxygen vacancy. Alternatively, the oxygen may be partially replaced with fluorine or another element. δ is, for example, preferably 0 or greater. On the other hand, δ is preferably 0.2 or less, more preferably 0.1 or less, and even more preferably 0.05 or less.

The above-described complex oxide contained in the core particles may contain a boron (B) element, for example. Boron may be present in a state in which, for example, it is present within a spinel crystalline phase. In addition, the B element may be present in a complex oxide phase containing Ni, Mn, and B elements. An example of the complex oxide phase containing Ni, Mn, and B elements is a Ni₅MnO₄(BO₃)₂ crystalline phase. It is possible to confirm that the core particles contain the Ni₅MnO₄(BO₃)₂ crystalline phase by checking, for example, a diffraction pattern obtained through X-ray diffraction (hereinafter also referred to as "XRD") measurement against the PDF (Powder Diffraction File) number "01-079-1029". A complex oxide containing Ni, Mn, and B elements is presumed to be present on the surface and at the grain boundaries of the core particles.

The B element content in the core particles is, for example, preferably 0.02 mass% or more, and more preferably 0.05 mass% or more. On the other hand, the B element content is, for example, preferably 0.80 mass% or less, more preferably 0.60 mass% or less, even more preferably 0.30 mass% or less, and yet even more preferably 0.25 mass% or less. When the B element content satisfies the above-described lower limit, a sufficient discharge capacity at a high temperature (e.g., 45°C) can be maintained. When the B element content satisfies the above-described upper limit, sufficient rate characteristics can be maintained.

The above-described complex oxide constituting the core particles may contain other components in addition to the Li element, Mn element, element M, element M1, element M2, and O element. Although the content of the other elements is not particularly limited as long as desired functions can be obtained as the active material, the content of each of the other elements is, for example, preferably 0.5 mass% or less, and more preferably 0.2 mass% or less. When the content of the other elements is within the above-described range, the complex oxide constituting the core particles can exhibit more excellent properties as the active material.

Whether or not the complex oxide has a spinel-type crystal structure can be determined by, for example, performing fitting to a crystal structure model of a cubic crystal with the space group Fd-3m (Origin Choice 2), and if the ranges of Rwp and S, which indicate the degree of agreement between the observed intensity and the calculated intensity, satisfy Rwp < 10 or S < 2.5, the crystal structure of the complex oxide can be determined as being a spinel-type crystal structure.

An example of a lithium-metal complex oxide with a layered rock salt-type crystal structure contained in the core particles is a lithium-metal complex oxide with a layered rock salt-type crystal structure represented by the general formula (3): Li₁₊ₓM₁₋ₓO₂, for example. When a lithium-metal complex oxide represented by the general formula (3) is employed, the performance of a battery containing the electrode mixture of the present invention is improved even more.

In the general formula (3), M preferably represents either (i) or (ii) below:
(i) at least one element selected from a Ni element, a Co element, a Mn element, and an Al element; or
(ii) a combination of at least one element selected from a Ni element, a Co element, a Mn element, and an Al element, a transition element found in Groups 3 to 11 on the periodic table, and at least one element selected from the typical elements in Periods 2 to 4 on the periodic table.

Also, in the formula (3), x is, for example, preferably -0.05 or greater, more preferably -0.03 or greater, and even more preferably 0 or greater. On the other hand, x is, for example, preferably 0.09 or less, more preferably 0.07 or less, and even more preferably 0.05 or less.

In the general formula (3): Li₁₊ₓM₁₋ₓO₂, "1+x" is, for example, preferably 0.95 or greater, more preferably 0.97 or greater, and even more preferably 1.00 or greater. On the other hand, "1+x" is, for example, preferably 1.09 or less, more preferably 1.07 or less, and even more preferably 1.05 or less.

Examples of the transition element found in Groups 3 to 11 on the periodic table and the typical elements in Periods 2 to 4 on the periodic table, which may be selected as "M" in the general formula (3), include Al, P, V, Fe, Ti, Mg, Cr, Ga, Cu, Zn, Nb, Zr, Mo, W, Ta, Re, and the like.

Therefore, for example, the constituent element M is preferably either at least one element selected from Ni, Co, Mn, and Al or a combination of at least one element selected from Ni, Co, Mn, and Al and at least one element selected from P, V, Fe, Ti, Mg, Cr, Ga, Cu, Zn, Nb, Zr, Mo, W, Ta, and Re.

It is preferable that "M" in the general formula (3) contains, for example, three elements Mn, Co, and Ni. For example, M may consist of the three elements Mn, Co, and Ni or may be a combination of these three elements and at least one element selected from the other elements.

When "M" in the formula (3) above contains the three elements Mn, Co, and Ni, the molar content ratio between Mn, Co, and Ni is, for example, preferably Mn:Co:Ni = 0.01 to 0.45:0.01 to 0.40:0.30 to 0.95, more preferably Mn:Co:Ni = 0.05 to 0.40:0.03 to 0.40:0.30 to 0.85, and even more preferably Mn:Co:Ni = 0.05 to 0.40:0.03 to 0.40:0.30 to 0.75.

Although the atomic ratio of the oxygen content in the general formula (3) is specified as "2" for the sake of convenience, the compound may be somewhat non-stoichiometric. That is to say, the atomic ratio of the oxygen content may be "2-δ". "-δ" indicates oxygen vacancy, and δ is preferably 0 or greater or 0.2 or less, more preferably 0.1 or less, and even more preferably 0.05 or less.

The complex oxide contained the core particles may contain impurities. The impurity content is not particularly limited as long as the active material can exhibit desired functions, but, for example, is preferably 0.20 mass% or less, and more preferably 0.17 mass% or less. When the impurity content is within this range, the complex oxide can exhibit more excellent properties as the active material.

Whether or not the complex oxide has a layered rock salt-type crystal structure can be determined by, for example, performing fitting to a crystal structure model of a hexagonal crystal with the space group R-3m, and if the ranges of Rwp and S, which indicate the degree of agreement between the observed intensity and the calculated intensity, satisfy Rwp < 10 or S < 2.5, the crystal structure of the complex oxide can be determined as being a layered rock salt-type crystal structure.

Primary particles of the core particles may be monocrystalline or polycrystalline, but are particularly preferably polycrystalline. "Monocrystalline" means that the primary particles are each composed of a single crystallite, while "polycrystalline" means that a plurality of crystallites are present within each of the primary particles. Whether or not the core particles are polycrystalline can be checked by observing a primary particle cross section using, for example, electron backscatter diffraction (EBSD). If the core particles are polycrystalline, it can be confirmed that crystalline bodies with a plurality of orientations are present within a primary particle.

### Coating Portion

The active material used in the present invention preferably has core particles and coating portions. As a result of the active material having the coating portions, the contact between the core particles and the sulfur compound, which will be described later, can be reduced in the active material. In other words, a configuration is adopted in which a core particle, a coating portion, and the sulfur compound are disposed in this order. With this configuration, it is possible to suppress problems such as the formation of a resistive layer at the interfaces between the core particles and the coating portions and therefore suppress problems such as the resistive layer inhibiting the transfer of lithium ions.

It is preferable that, regardless of the type of core particles, the coating portions contain a lithium (Li) element, an element A, and an oxygen (O) element, where A is at least one element selected from titanium (Ti), zirconium (Zr), tantalum (Ta), niobium (Nb), and aluminum (Al), because this improves the performance of a battery containing the electrode mixture of the present invention. It is preferable that the element A contains at least one element selected from the Ta element and the Nb element. Furthermore, it is preferable that the element A contains at least the Nb element, and, in particular, it is preferable that the element A is the Nb element.

When the element A contains at least one element selected from the Ta element and the Nb element, the composition of the coating portions can be represented by LiₓAO_{y}, for example. Typically, LiAO₃, that is, a composition in which x = 1 and y = 3 can be envisaged. When the coating portions are made of an amorphous compound as described later, x and y in the formula can take any values within ranges based on the valences of the elements. In particular, it is particularly preferable that the coating portions have a composition (1 < x) in which more than 1 mole of Li is contained per mole of the element A, because this improves the performance of a battery containing the electrode mixture of the present invention.

When the compound constituting the coating portions is represented by LiₓAO_{y}, a method for satisfying 1 < x may be to blend the raw materials such that the lithium raw material is added in such an amount relative to that of the element A raw material that the amount of Li is in excess of the amount in the stoichiometric composition ratio of a composition that is expected to be produced, for example, LiAO₃. In this case, simply adding Li in an excess amount tends to result in the formation of lithium carbonate on the surface of the active material due to the excess Li. The lithium carbonate thus formed may cause resistance and hence degrade the rate characteristics and the cycle characteristics. For this reason, it is preferable to adjust the amounts of the element A raw material and lithium raw material added such that the compound constituting the coating portions satisfies a predetermined composition, with consideration given to the formation of lithium carbonate.

On the surface of the core particles, the coating portions may be present as particles, may be present as aggregate particles formed through aggregation of particles, or may be present while forming a layer. The wording "be present while forming a layer" means a state in which the material constituting the coating portions is present with a certain thickness. The thickness of the coating portions coating the surface of the core particles may be uniform or nonuniform. It is possible to confirm that the surface of the core particles is coated with the coating portions by, for example, observing the surface of the core particles using an electron microscope. The coverage by the coating portions is not particularly limited as long as the coating portions are present at least on the surface of the core particles. In the present invention, the coverage of the core particles by the coating portions is, for example, preferably 50% or more, more preferably 70% or more, even more preferably 80% or more, yet even more preferably 90% or more, and yet even more preferably 95% or more.

The coating portions may be crystalline or amorphous, but are preferably amorphous. When the coating portions are amorphous, the coating portions are present as buffer layers between the core particles and the sulfur compound and can reduce the reaction resistance. Whether the coating portions are crystalline or amorphous can be determined by, for example, checking whether a halo pattern is obtained through selected area electron diffraction. A halo pattern refers to a broad diffraction pattern at lower angles with no distinct diffraction peak.

The coating portions can be formed using the following method, for example. That is, coating portions can be formed by adding core particles to a mixed solution in which a lithium raw material and an element A raw material are dissolved in a solvent, and then drying and firing the mixture under predetermined conditions. However, this method is merely a preferred example, and the method for forming coating portions is not limited to this method. For example, it is also possible to form coating portions using a tumbling fluidized bed coating method, a sol-gel method, a mechanofusion method, a CVD method, a PVD method, and the like, by appropriately adjusting the conditions.

The amount of coating portions coating the surface of the core particles can be expressed as the percentage of the element A in the active material. The percentage of the element A in the active material is, for example, preferably 0.2 mass% or more, more preferably 0.5 mass% or more, even more preferably 1.0 mass% or more, and yet even more preferably 1.5 mass% or more. On the other hand, the percentage thereof is, for example, preferably 5.0 mass% or less, more preferably 4.0 mass% or less, and even more preferably 3.5 mass% or less. When the amount of coating portions is within the above-described range, the advantages resulting from the formation of the coating portions are prominent.

Furthermore, the BET specific surface area of active material particles including the core particles and the coating portions is, for example, preferably 0.5 m²/g or more, more preferably 1.0 m²/g or more, even more preferably 1.5 m²/g or more, and yet even more preferably 2.0 m²/g or more. On the other hand, the BET specific surface area is, for example, preferably 8.0 m²/g or less, more preferably 7.0 m²/g or less, and even more preferably 6.0 m²/g or less. When the amount of coating portions is within the above-described range as well, the advantages resulting from the formation of the coating portions are prominent.

### Sulfur Compound

The electrode mixture contains a sulfur compound in addition to the active material. The sulfur compound contains a lithium (Li) element, a phosphorus (P) element, a sulfur (S) element, and a halogen (X) element.

Research conducted by the inventor of the present invention found that one reason why the reaction resistance between the solid electrolyte and the active material in the electrode mixture increases when the charging voltage of a solid-state battery is increased is that lithium ions in the solid electrolyte move to the active material, then electrons move from the solid electrolyte to the active material due to charge compensation, and the solid electrolyte is thus oxidized and decomposed. The research also found that another reason is that sulfur in the solid electrolyte and oxygen in the active material are exchanged, resulting in the formation of a high-resistance layer at the interface therebetween.

The inventor of the present invention conducted further research with these points taken into consideration and found that, when a solid electrolyte is constituted by the above-described sulfur compound, setting the mole ratio of the X element to the P element to less than 1, preferably less than 0.8, and more preferably less than or equal to 0.6 makes it possible to suppress the movement of lithium ions from the solid electrolyte to the active material and, furthermore, suppress the exchange between sulfur in the solid electrolyte and oxygen in the active material. As a result, even when a solid-state battery is constituted by an electrode mixture made of the above-described active material and the above-described sulfur compound, deterioration in battery characteristics such as discharge capacity can be suppressed. The lower limit of the mole ratio of the X element to the P element is not particularly limited, but may be 0.3, for example.

The X element is preferably at least one element selected from a fluorine (F) element, a chlorine (Cl) element, a bromine (Br) element, and an iodine (I) element, for example. It is preferable that the X element contains at least one element selected from the Cl element and Br element, and, in particular, it is advantageous that the X element contains the Br element from the viewpoint of suppressing an increase in the reaction resistance. The sulfide compound may also contain another element in addition to the Li, P, S and X elements. For example, the Li element may be partially replaced with another alkali metal element, the P element may be partially replaced with another pnictogen element, or the S element may be partially replaced with another chalcogen element.

For the same reason as above, the mole ratio of the Li element to the P element is preferably 4 or greater, more preferably 5 or greater and 8 or less, and even more preferably 6 or greater and 7 or less.

From the viewpoint of reducing the reaction resistance with the active material even further, a particularly preferable sulfur compound that can be used in the present invention is a material that contains a crystalline phase having an argyrodite-type crystal structure. An argyrodite-type crystal structure refers to a crystal structure possessed by a group of compounds derived from a mineral represented by the chemical formula Ag₈GeS₆. From the viewpoint of reducing the reaction resistance with the active material yet even further, it is particularly preferable that the sulfur compound having an argyrodite-type crystal structure has a crystal structure belonging to that of cubic crystals.

Whether or not a sulfur compound has a crystalline phase with an argyrodite-type crystal structure can be determined by performing XRD measurement or the like. For example, in a diffraction pattern determined through XRD measurement using CuKα1 radiation, a crystalline phase with an argyrodite-type crystal structure shows characteristic diffraction peaks at 20 = 15.3° ± 1.0°, 18.0° ± 1.0°, 25.5° ± 1.0°, 30.0° ± 1.0°, 30.9° ± 1.0°, and 44.3° ± 1.0°. Furthermore, depending on the element species constituting the sulfur compound, the crystalline phase may also show characteristic diffraction peaks at 20 = 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, in addition to the aforementioned diffraction peaks. To identify diffraction peaks due to an argyrodite-type crystal structure, data of PDF No. 00-034-0688, for example, is used.

When the sulfur compound is a material containing a crystalline phase having an argyrodite-type crystal structure, it is preferable that the sulfur compound is represented by a composition formula (I): LiₐPS_{b}X_{c}, where X is at least one element selected from a fluorine (F) element, a chlorine (Cl) element, a bromine (Br) element, and an iodine (I) element, from the viewpoint of improving the lithium-ion conductivity between electrode mixtures. Preferably, X is at least one element selected from the Cl and Br elements.

In the composition formula (I), a, which indicates the mole ratio of the Li element, is, for example, preferably 5.0 or greater, more preferably 5.5 or greater, and even more preferably 6.0 or greater. On the other hand, a is, for example, preferably 8.0 or less, more preferably 7.5 or less, and even more preferably 7.0 or less. When a is within this range, the cubic argyrodite-type crystal structure is stable at temperatures near room temperature (25°C), and the reactivity with the active material can be effectively reduced.

In the composition formula (I), b, which indicates the mole ratio of the S element, is, for example, preferably 4.0 or greater, more preferably 4.5 or greater, and even more preferably 5.0 or greater. On the other hand, b is, for example, preferably 7.0 or less, more preferably 6.5 or less, and even more preferably 6.0 or less. When b is within this range, the argyrodite-type crystal structure is stable at temperatures near room temperature (25°C), and the reactivity with the active material can be effectively reduced.

In the composition formula (I), c, which indicates the mole ratio of the X element, is, for example, preferably 0.1 or greater, and more preferably 0.3 or greater. On the other hand, c is, for example, preferably less than 1.0, more preferably 0.8 or less, and even more preferably 0.6 or less.

The sulfur compound may also be represented by a composition formula (II): Li_{7-d}PS_{6-d}X_{d}. A composition represented by the composition formula (II) is the stoichiometric composition of an argyrodite-type crystalline phase. In the composition formula (II), X is as defined in the composition formula (I).

In the composition formula (II), d is, for example, preferably 0.1 or greater, and more preferably 0.3 or greater. On the other hand, d is, for example, preferably less than 1.0, more preferably 0.8 or less, and even more preferably 0.6 or less.

The sulfur compound may also be represented by a composition formula (III): Li_{7-d-2e}PS_{6-d-e}X_{d}. An argyrodite-type crystalline phase having a composition represented by the composition formula (III) is generated by, for example, a reaction between an argyrodite-type crystalline phase having a composition represented by the composition formula (II) and P₂S₅ (phosphorus pentasulfide).

In the composition formula (III), e is a value indicating the deviation of the Li₂S component from the stoichiometric composition represented by the composition formula (II). In the formula, e is, for example, preferably -0.9 or greater, more preferably -0.6 or greater, and even more preferably -0.3 or greater. On the other hand, e is, for example, preferably (-d+2) or less, more preferably (-d+1.6) or less, and even more preferably (-d+1.0) or less.

In the composition formula (I), (II), or (III), P may be partially replaced with at least one or two or more elements selected from Si, Ge, Sn, Pb, B, Al, Ga, As, Sb, and Bi. In this case, the composition formula (I) is expressed as Liₐ(P_{1-y}M_{y})S_{b}X_{c}, the composition formula (II) is expressed as Li_{7-d}(P_{1-y}M_{y})S_{6-d}X_{d}, and the composition formula (III) is expressed as Li_{7-d-2e}(P_{1-y}M_{y})S_{6-d-e}X_{d}. M represents at least one element selected from Si, Ge, Sn, Pb, B, Al, Ga, As, Sb and Bi. In the formulae above, y is, for example, preferably 0.01 or greater, more preferably 0.02 or greater, and even more preferably 0.05 or greater. On the other hand, y is, for example, preferably 0.7 or less, more preferably 0.4 or less, and even more preferably 0.2 or less.

It is particularly preferable that, among the above-described composition formulae (I) to (III), the sulfur compound is represented by a composition formula (IV): Li_{7-d}PS_{6-d}Cl_{d1}Br_{d2}.

In the composition formula (IV), it is preferable that the total mole ratio d (= d1 + d2) of Cl and Br is less than 1.0, for example. When the total mole ratio d (= d1+ d2) of Cl and Br is within the above-described range, the movement of lithium ions from the solid electrolyte, that is, the sulfur compound to the active material can be sufficiently suppressed, and, furthermore, the exchange between sulfur in the sulfur compound and oxygen in the active material can be sufficiently suppressed. As a result, even when a solid-state battery is constituted by an electrode mixture made of the above-described active material and the above-described sulfide compound, favorable battery characteristics such as discharge capacity can be obtained. In view of this, d in the composition formula (IV) is, for example, preferably 0.1 or greater, and more preferably 0.3 or greater. On the other hand, d is, for example, preferably less than 1.0, more preferably 0.8 or less, and even more preferably 0.6 or less.

In the composition formula above, the ratio (d2/d1) of the mole ratio of Br to the mole ratio of Cl is, for example, preferably 0.1 or greater, and more preferably 0.3 or greater. On the other hand, the ratio (d2/d1) is, for example, preferably 10.0 or less, more preferably 5.0 or less, and even more preferably 3.0 or less. When d2/d1 is within the above-described range, lithium-ion conductivity can be enhanced even further.

In the composition formula above, d1, which indicates the mole ratio of Cl, is, for example, preferably 0.1 or greater, more preferably 0.2 or greater, and even more preferably 0.3 or greater. On the other hand, d1 is, for example, preferably 0.9 or less, more preferably 0.8 or less, and even more preferably 0.6 or less. When d1 satisfies the above-described lower limit, lithium-ion conductivity can be enhanced even further. On the other hand, when d1 satisfies the above-described upper limit, the reactivity with the active material can be sufficiently suppressed.

In the composition formula above, d2, which indicates the mole ratio of Br, is, for example, preferably 0.1 or greater, more preferably 0.2 or greater, and even more preferably 0.3 or greater. On the other hand, d2 is, for example, preferably 0.9 or less, more preferably 0.8 or less, and even more preferably 0.6 or less. When d2 satisfies the above-described lower limit, the reactivity with the active material can be sufficiently suppressed. On the other hand, when d2 satisfies the above-described upper limit, lithium-ion conductivity can be enhanced even further.

Irrespective of whether the sulfur compound is represented by the composition formula (I), (II), (III), or (IV), when the halogen (X) element contains a bromine (Br) element, lithium-ion conductivity between electrode mixtures is advantageously improved even further.

From the viewpoint of improving the lithium-ion conductivity between the sulfur compound and the active material in the electrode mixture of the present invention, the percentage of the sulfur compound in the electrode mixture of the present invention is, for example, preferably 1 mass% or more, more preferably 5 mass% or more, and even more preferably 10 mass% or more. On the other hand, the percentage thereof is, for example, preferably 50 mass% or less, more preferably 45 mass% or less, and even more preferably 40 mass% or less. Note that the above-described sulfur compound is generally formed as a surface portion disposed on the surface of the active material. The percentage of the sulfur compound in the electrode mixture of the present invention can be determined by, for example, performing Rietveld analysis of a diffraction pattern obtained through XRD measurement using CuKα1 radiation.

The electrode mixture of the present invention can be formed by, for example, mixing particles of the above-described active material and particles of the above-described sulfur compound.

The electrode mixture typically contains a conductive material. There is no particular limitation on the conductive material, and any conductive material that can be used in an electrode mixture can be used. For example, a conductive substance made of a carbon material may be used.

### Electrode Mixture

The electrode mixture of the present invention has a particle size of, for example, preferably 0.1 µm or more, more preferably 0.3 µm or more, and even more preferably 0.5 µm or more, in terms of the cumulative volume particle size D₅₀ at 50 vol% cumulative volume as measured using a laser diffraction scattering particle size distribution measurement method. On the other hand, the particle diameter D₅₀ is, for example, preferably 10.0 µm or less, more preferably 8.0 µm or less, and even more preferably 5.0 µm or less. When the particle size of the electrode mixture of the present invention is within this range, sufficiently good contact between the particles of the electrode mixture is achieved, and the lithium-ion conductivity between the particles of the electrode mixture is improved even further.

The electrode mixture of the present invention has a BET specific surface area of, for example, preferably 1.0 m²/g or more, more preferably 1.5 m²/g or more, and even more preferably 2.0 m²/g or more. On the other hand, the BET specific surface area is, for example, preferably 10.0 m²/g or less, more preferably 8.5 m²/g or less, and even more preferably 7.0 m²/g or less. When the BET specific surface area of the electrode mixture of the present invention is within this range, sufficiently good contact between the particles of the electrode mixture is achieved, and the lithium-ion conductivity between the particles of the electrode mixture is improved even further. The BET specific surface area can be set within this range by, for example, controlling the particle size of the active material constituting the electrode mixture of the present invention, or controlling the coating amount and the coating state of the surface portion coating the active material.

The electrode mixture of the present invention is useful for forming a positive electrode of a battery.

An electrode slurry containing the electrode mixture of the present invention contains the electrode mixture and a solvent. Examples of the solvent include, but are not limited to, water, chloroform, alcohols such as methanol, ethanol, propanol, 2-propanol, butanol, ethylene glycol, propylene glycol, and glycerol, dimethyl sulfoxide (DMSO), and the like.

A battery containing the electrode mixture of the present invention may be a battery with a structure having, for example, a positive electrode layer, a negative electrode layer, and a solid electrolyte layer located between the positive electrode layer and the negative electrode layer, or in other words, a solid-state battery. When the electrode mixture of the present invention contains a positive electrode active material, the positive electrode layer contains the electrode mixture of the present invention. A solid electrolyte contained in the solid electrolyte layer of the battery may be the same as or different from the sulfur compound constituting the electrode mixture. When the solid electrolyte is a material different from the above-described sulfur compound, for example, a sulfur compound that does not have an argyrodite-type crystal structure, a sulfur compound made of a glass-ceramic, or the like may be used as the solid electrolyte. Alternatively, an oxide or nitride solid electrolyte that has lithium-ion conductivity may be used.

With regard to the foregoing embodiments, the present invention further discloses the following electrode mixture and electrode slurry and battery using the electrode mixture.
(1) An electrode mixture comprising:
   an active material containing a lithium (Li) element, a manganese (Mn) element, and an oxygen (O) element; and
   a sulfur compound containing a lithium (Li) element, a phosphorus (P) element,
   a sulfur (S) element, and a halogen (X) element,
   wherein the sulfur compound has a mole ratio of the halogen (X) element to the phosphorus (P) element of less than 1.
(2) The electrode mixture as set forth in clause (1), wherein the active material has a working potential of at least 4.5 V against a metallic Li reference potential.
(3) The electrode mixture as set forth in clause (1) or (2),
   wherein the active material includes
      a core portion containing a lithium (Li) element, a manganese (Mn) element, and an oxygen (O) element and
      a coating portion located on a surface of the core portion, and
   the coating portion contains a lithium (Li) element, an element A, and an oxygen (O) element, where A is at least one element selected from titanium (Ti), zirconium (Zr), tantalum (Ta), niobium (Nb), and aluminum (Al).
(4) The electrode mixture as set forth in any one of clauses (1) to (3), wherein the halogen (X) element contained in the sulfur compound is at least one element selected from a chlorine (Cl) element and a bromine (Br) element.
(5) The electrode mixture as set forth in any one of clauses (1) to (4), wherein the sulfur compound has a mole ratio of the lithium (Li) element to the phosphorus (P) element of 4 or greater.
(6) The electrode mixture as set forth in any one of clauses (1) to (5), wherein the sulfur compound contains a crystalline phase having an argyrodite-type crystal structure.
(7) An electrode slurry comprising an electrode mixture and a solvent,
   wherein the electrode mixture contains
      an active material containing a lithium (Li) element, a manganese (Mn) element, and an oxygen (O) element and
      a sulfur compound containing a lithium (Li) element, a phosphorus (P) element,
      a sulfur (S) element, and a halogen (X) element, and
   the sulfur compound has a mole ratio of the halogen (X) element to the phosphorus (P) element of less than 1.
(8) A A battery comprising
   a positive electrode layer,
   a negative electrode layer, and
   a solid electrolyte layer containing a solid electrolyte and being disposed between the positive electrode layer and the negative electrode layer,

   wherein the positive electrode layer contains
      an active material containing a lithium (Li) element, a manganese (Mn) element, and an oxygen (O) element and
      a sulfur compound containing a lithium (Li) element, a phosphorus (P) element,
      a sulfur (S) element, and a halogen (X) element, and
   the sulfur compound has a mole ratio of the halogen (X) element to the phosphorus (P) element of less than 1.
(9) The battery as set forth in clause (8), wherein the solid electrolyte and the sulfur compound contained in an electrode mixture are different from each other.

### Examples

Hereinafter, the present invention will be described in further detail using examples. However, the scope of the present invention is not limited to the examples given below. Unless otherwise specified, "%" means "mass%".

### Examples 1, 2, and 3 and Comparative Examples 1, 2, 3, and 4

### (1) Production of Core Particles

Sodium hydroxide and ammonia were supplied to an aqueous solution in which nickel sulfate, cobalt sulfate, and manganese sulfate were dissolved, and a metal complex hydroxide with a mole ratio of nickel:cobalt:manganese = 0.6:0.2:0.2 was prepared using a coprecipitation method.

Next, lithium carbonate and the metal complex hydroxide were weighed and then sufficiently mixed using a ball mill, and the obtained mixed powder was calcined at 720°C for 10 hours using a static electric furnace.

The thus obtained calcined powder was disintegrated, and fired at 920°C for 22 hours using the static electric furnace again. The fired mass obtained through the firing was put into a mortar and disintegrated using a pestle, and classified with a sieve having an opening size of 53 µm, and an undersize fraction of the resulting complex oxide was collected. X-ray diffraction measurement confirmed that this complex oxide had a layered rock salt-type crystal structure. Also, elementary analysis confirmed that the complex oxide was represented by a composition formula LiNi_{0.6}Co_{0.2}Mn_{0.2}O₂ (hereinafter, this complex oxide is also referred to as "NCM622").

### (2) Formation of Coating Portions

Lithium hydroxide monohydrate and ammonium peroxoniobate were added to and dissolved in water to prepare an aqueous solution for forming coating portions. Then, 30 g of NCM622 powder was put into 33 ml of this aqueous solution and stirred and mixed to prepare a slurry. This slurry was dried at 120°C for 90 minutes. The obtained dry powder was loosened in a mortar, and then heat-treated using a box-shaped small electric furnace (manufactured by Koyo Thermo Systems Co., Ltd.) in such a manner that the temperature was maintained at 350°C for 5 hours in an atmosphere of air, to obtain active material particles in which the surface of NCM622 particles was coated with coating portions made of a substance containing lithium, niobium, and oxygen. The D₅₀ was measured using a laser diffraction scattering particle size distribution measurement method and found to be 3 µm.

### (3) Formation of Sulfur Compound

A Li₂S powder, a P₂S₅ powder, a LiCl powder, and a LiBr powder were weighed so as to obtain a composition shown in Table 1, and pulverized and mixed in a ball mill for 10 hours to prepare a mixed powder.

The mixed powder was filled into a carbon container, heated in a tubular electric furnace at a temperature increase and decrease rate of 200°C/h while flowing H₂S gas (100% purity) at 1.0 L/min, and fired at 500°C for 4 hours to obtain a fired body. The fired body was pulverized such that the D₅₀ of a volume-weighted particle size distribution obtained through measurement using a laser diffraction scattering particle size distribution measurement method was 1 µm or less, and thus, a sulfur compound for use in an electrode mixture was obtained. All the operations of weighing, mixing, placement into the electric furnace, removal from the electric furnace, and pulverization were performed in a glove box purged with sufficiently dried Ar gas (dew point: -60°C or lower). The obtained sulfur compound was subjected to XRD measurement and confirmed to have an argyrodite-type crystal structure.

### (4) Production of Solid-State Battery

A positive electrode mixture was prepared by mixing the electrode active material powder and the sulfur compound powder obtained in (1) to (3) above as well as a conductive material (VGCF (registered trademark)) powder in a mortar at a mass ratio of 60:37:3.

A negative electrode mixture was prepared by mixing a graphite powder and a solid electrolyte powder (composition formula: Li_{5.4}PS_{4.4}Cl_{0.8}Br_{0.8}) in a mortar at a mass ratio of 64:36.

Then, a lower opening of a ceramic cylinder with openings at the upper and lower ends (opening diameter: 10 mm) was closed with an electrode made of SUS, and 0.05 g of a solid electrolyte (composition formula: Li_{5.4}PS_{4.4}Cl_{0.8}Br_{0.8}) was poured into the cylinder. After an electrode was placed to cover the upper opening, uniaxial pressing was performed at 10 MPa to prepare an electrolyte layer. The upper electrode was temporarily removed, the positive electrode mixture was poured over the electrolyte layer and smoothed flat, and then the upper electrode was reattached, followed by uniaxial pressing at 12 MPa. The lower electrode was temporarily removed, the negative electrode mixture was poured, the lower electrode was reattached, and uniaxial pressing was performed at 42 MPa to pressure-bond the positive electrode layer, the electrolyte layer, and the negative electrode layer. The upper electrode and the lower electrode were screwed together at four points with a torque pressure of 6 N·m, and thus, a solid-state battery having a capacity equivalent to 1 mAh was produced. In this case, the solid-state battery was produced in a glove box purged with dry air having an average dew point of -70°C.

### (5) Evaluation of Increase in Resistance

An all-solid-state battery having a capacity ratio of 2.4, with the capacity of the positive electrode being 1 mAh and the capacity of the negative electrode being 2.4 mAh, was initially subjected to constant-current charging at 0.1 C to 4.85 V, and after the voltage reached 4.85 V, constant-voltage charging at 4.85 V was performed. Then, constant-current discharging at 0.1 C was performed to 2.5 V

Next, constant-current charging at 0.1 C was performed to 3.8 V, and after the voltage reached 3.8 V, constant-voltage charging at 3.8 V was performed. After that, impedance (resistance) measurement was performed to evaluate the initial resistance. Then, constant-current charging at 0.1 C was performed to 4.85 V, and after the voltage reached 4.85 V, constant-voltage charging at 4.85 V was performed.

In this state, the battery was stored at 80°C for 2 days, and again, constant-current charging at 0.1 C was performed to 4.85 V, and after the voltage reached 4.85 V, constant-voltage charging at 4.85 V was performed. Then, constant-current discharging at 0.1 C was performed to 2.5 V

Subsequently, constant-current charging at 0.1 C was performed to 3.8 V, and after the voltage reached 3.8 V, constant-voltage charging at 3.8 V was performed. After that, impedance (resistance) measurement was performed to evaluate the resistance after storage. In the constant-voltage charging, the end point was set at the point in time when the current value reached 0.01 C.

The impedance was measured according to an AC impedance method using a SOLARTRON 1255B FREQUENCY RESPONSE ANALYZER available from TOYO Corporation. The measurement conditions were as follows: the AC amplitude was 10 mV, the frequency range was 1.0×10⁻⁶ to 1.0×10⁻¹ Hz, and, as the impedance, the reaction resistance (Ω) was calculated from the intersection with the horizontal axis of a Cole-Cole plot that was a complex impedance plane plot of the measurement results.

**Table 1**

| | Sulfur compound | Halogen/P | Initial resistance (Ω) | Resistance after storage (Ω) | Increase in resistance (times) |
|---|---|---|---|---|---|
| Ex. 1 | Li_{6.7}PS_{5.7}Cl_{0.15}Br_{0.15} | 0.3 | 225 | 2587 | 11.5 |
| Ex. 2 | Li_{6.4}PS_{5.4}Cl_{0.3}Br_{0.3} | 0.6 | 362 | 1999 | 5.5 |
| Ex. 3 | Li_{6.4}PS_{5.4}Br_{0.6} | 0.6 | 295 | 3004 | 10.2 |
| Com. Ex. 1 | Li_{6.0}PS_{5.0}Cl_{0.5}Br_{0.5} | 1.0 | 139 | 4080 | 29.4 |
| Com. Ex. 2 | Li_{5.8}PS_{4.8}Br_{1.2} | 1.2 | 208 | 3507 | 16.9 |
| Com. Ex. 3 | Li_{5.4}PS_{4.4}Cl_{0.8}Br_{0.8} | 1.6 | 197 | 2610 | 13.2 |
| Com. Ex. 4 | Li_{5.4}PS_{4.4}Br_{1.6} | 1.6 | 220 | 3764 | 17.1 |

It can be clearly seen from the results shown in Table 1 that the solid-state batteries including the electrode mixtures obtained in the examples each has a lower rate of resistance increase after storage than the solid-state batteries of the comparative examples. That is to say, it can be seen that, even when the charging voltage of the solid-state battery is increased, an increase in reaction resistance between the solid electrolyte and the active material in the electrode mixture can be suppressed.

### Industrial Applicability

According to the present invention, it is possible to provide an electrode mixture in which an increase in reaction resistance between an active material and a solid electrolyte is suppressed even when the charging voltage of a solid-state battery is increased, and an electrode slurry and a battery using the electrode mixture.

## Claims

1. An electrode mixture comprising:
an active material containing a lithium (Li) element, a manganese (Mn) element, and an oxygen (O) element; and
a sulfur compound containing a lithium (Li) element, a phosphorus (P) element,
a sulfur (S) element, and a halogen (X) element,
wherein the sulfur compound has a mole ratio of the halogen (X) element to the phosphorus (P) element of less than 1.

2. The electrode mixture according to claim 1, wherein the active material has a working potential of at least 4.5 V against a metallic Li reference potential.

3. The electrode mixture according to claim 1 or 2,
wherein the active material includes
a core portion containing a lithium (Li) element, a manganese (Mn) element, and an oxygen (O) element and
a coating portion located on a surface of the core portion, and
the coating portion contains a lithium (Li) element, an element A, and an oxygen (O) element, where A is at least one element selected from titanium (Ti), zirconium (Zr), tantalum (Ta), niobium (Nb), and aluminum (Al).

4. The electrode mixture according to claim 1 or 2, wherein the halogen (X) element contained in the sulfur compound is at least one element selected from a chlorine (Cl) element and a bromine (Br) element.

5. The electrode mixture according to claim 1 or 2, wherein the sulfur compound has a mole ratio of the lithium (Li) element to the phosphorus (P) element of 4 or greater.

6. The electrode mixture according to claim 1 or 2, wherein the sulfur compound contains a crystalline phase having an argyrodite-type crystal structure.

7. An electrode slurry comprising an electrode mixture and a solvent,
wherein the electrode mixture contains
an active material containing a lithium (Li) element, a manganese (Mn) element, and an oxygen (O) element and
a sulfur compound containing a lithium (Li) element, a phosphorus (P) element,
a sulfur (S) element, and a halogen (X) element, and
the sulfur compound has a mole ratio of the halogen (X) element to the phosphorus (P) element of less than 1.

8. A battery comprising
a positive electrode layer,
a negative electrode layer, and
a solid electrolyte layer containing a solid electrolyte and being disposed between the positive electrode layer and the negative electrode layer,
wherein the positive electrode layer contains
an active material containing a lithium (Li) element, a manganese (Mn) element, and an oxygen (O) element and
a sulfur compound containing a lithium (Li) element, a phosphorus (P) element,
a sulfur (S) element, and a halogen (X) element, and
the sulfur compound has a mole ratio of the halogen (X) element to the phosphorus (P) element of less than 1.

9. The battery according to claim 8, wherein the solid electrolyte and the sulfur compound contained in an electrode mixture are different from each other.
